(19) Europäisches Patentamt
European Patent Office
Office européen des brevets

(11) **EP 1 741 835 B1**

(12) **EUROPEAN PATENT SPECIFICATION**

(45) Date of publication and mention
of the grant of the patent:
**20.08.2014 Bulletin 2014/34**

(51) Int Cl.:
***E02B 3/04*** *(2006.01)*

(21) Application number: **05709407.0**

(22) Date of filing: **27.01.2005**

(86) International application number:
**PCT/JP2005/001133**

(87) International publication number:
**WO 2005/073469 (11.08.2005 Gazette 2005/32)**

(54) **WATER SWELLING WATER STOP MATERIAL**

WASSERQUELLENDES WASSERSPERRMATERIAL

MATERIAU D'ETANCHEITE DE PROTECTION CONTRE LES EAUX DE CRUES

(84) Designated Contracting States:
**AT BE BG CH CY CZ DE DK EE ES FI FR GB GR
HU IE IS IT LI LT LU MC NL PL PT RO SE SI SK TR**

(30) Priority: **30.01.2004 JP 2004024018
30.01.2004 JP 2004024031**

(43) Date of publication of application:
**10.01.2007 Bulletin 2007/02**

(73) Proprietors:
• **Sanyo Chemical Industries, Ltd.
Kyoto-shi,
Kyoto 605-0995 (JP)**
• **Kida, Hiroyuki
Takaoka-shi
Toyama 9330014 (JP)**

(72) Inventors:
• **KIDA, Hiroyuki
9330014 (JP)**
• **ZENITANI, Yukio
Kyoto-shi,
Kyoto 605-0995 (JP)**

(74) Representative: **Nithardt, Roland
Cabinet Nithardt & Associés S.A.
14 Boulevard Alfred Wallach
B.P. 1445
68071 Mulhouse Cedex (FR)**

(56) References cited:
EP-A1- 0 368 107        JP-A- 6 136 071
JP-A- 8 134 865         JP-A- 61 169 509
JP-A- 63 075 208        JP-A- 2000 303 424
JP-A- 2003 020 626      JP-U- 3 084 807
US-B1- 6 524 670

## Description

### Technical Field

The present invention relates to a water-swellable waterproof sealant used at floods. More particularly, it relates to a water-swellable waterproof sealant, easy to transport before use, capable of swelling rapidly with water and being stably stacked after swelling through water-absorption, with little water-leaking when stacked. EP 368107 A1 discloses a water-swellable waterproof sealant according to the preamble of claim 1.

### Background Art

Heretofore, sandbags are used as emergency measures to prevent invading of water and sand at floods or water disasters. Instead of such sandbags filled with sand or soil, are proposed recently various sandbag alternatives, easy to handle and store, comprising water-permeable bags filled with water-swellable water-absorbent resin, which gels and swells through water-absorption when used. (For example, JP-A- 2000-303424).
These sandbag alternatives, however, have problems such that, when they are stacked to block a water flow, they are not stable in the stacked state in case where a large amount of water is surged, and cause collapse of the stacked bags and leakage of water from a gap between the swollen bags. There have been desired water-swellable waterproof sealants, capable of quickly absorbing water to swell, being easy to handle and providing alternative sandbags which are stable in the stacked state and hardly leak water from the gap between the bags. Hereinafter, swollen products of water-swellable waterproof sealants, after absorbing water, are called waterproof sealants. The present inventor have eagerly investigated to dissolve the above problems and attain a water-swellable waterproof sealant possessing a particular shape when absorbing water to swell and have reached the present invention.

### Brief Description of Drawings

Figure 1 is a top perspective view showing an example of a shape for a water-swellable waterproof sealant according to the present invention,

Figure 2 is a perspective view showing shapes of a water-swellable waterproof sealant in states of storage and use, respectively. The top view shows a state of storage and the bottom one shows a state of use,

Figure 3 is a perspective view showing plural (total of 24) water-swellable waterproof sealants as shown in Figure 1, configured to form a cube having a hole at the center, surrounded with four faces, each of the faces being formed with three tiers of coupled sealants wherein two of the sealants are aligned side-by side, in the state of inserting a tip of a hose with a diameter of 2 cm into the hole at the bottom to inject water into the hole,

Figure 4 shows an example of a shape of a water-swellable waterproof sealant provided with an open chamber. The top view is a top perspective view, the center one is a vertical sectional view at the middle part (A-A section), and the bottom one is a traverse sectional view at the middle part (B-B section),

Figure 5 is a perspective view of shapes of a water-swellable waterproof sealant in storage and in use, respectively. The top view is a state of storage and the bottom one is a state of use,

Figure 6 is a perspective view showing a procedure of stacking water-swellable waterproof sealants as shown in Figure 4 and driving a stake in the open chamber from the top,

Figure 7 is a perspective view showing an example of a shape of a water-swellable waterproof sealant provided with a different open chamber, and showing an example arranged with both closed and open chambers. The top view is a bag with a closed chamber at the center and two open chambers at both sides, whereas the bottom view has a structure with the open chamber at the center and two closed chambers at both sides,

Figure 8 is a perspective view showing plural (total of 24) water-swellable waterproof sealants as shown in Figure 4, configured to form a cube having a hole at the center, surrounded with four faces, each of the faces being formed with three tiers of coupled sealants wherein two of the sealants are aligned side-by side, in the state of inserting a tip of a hose with a diameter of 2 cm into the hole at the bottom to inject water into the hole.

**Description of Symbols**

1 Water-swellable waterproof sealant
2 Polyhedron
3 Closed chamber
4 Open chamber
5 Gelling agent
6 Feeding mouth
7 Divider
8 Antiskid member
9 String
10 Heavy solid
11 Shovel
12 Stake
13 Hose
14 Gravel
15 Water

**Disclosure of the Invention**

It is an object of the present invention to provide a water-swellable waterproof sealant, which is readily stored and light for transport before use, but quickly swells with water to function as waterproof sealant when used.

It is another object of the present invention to provide a water-swellable waterproof sealant, capable of providing swollen sealant, which is stable even when stacked, and is hardly collapsed even when exposed to a large amount of water, and causes little water-leaking from the gap between water sealants when the ones with similar geometry are stacked.

It is still another purpose to provide a water-swellable waterproof sealant, capable of stably resisting even strong water current without collapsing.

It is yet another object is to provide a water-swellable waterproof sealant, easy to handle, without becoming slippery and causing any leak of gel of water-absorbent resin gel from the waterproof sealant even under pressure through stacking the sealants.

Thus, according to the present invention, are provided sealants (1) to (8) as follows:

(1) A water-swellable waterproof sealant, which comprises water-absorbent resin particles (A) sealed within a polyhedron (B) composed of a water-permeable sheet.

(2) A water-swellable waterproof sealant as described in (1), wherein said polyhedron (B) has a configuration such that said polyhedron (B) containing sealed therein swollen water-absorbent resin particles (A) after absorbing water has at least two planar faces.

(3) A water-swellable waterproof sealant as described in (1), wherein said polyhedron (B) becomes rectangular or cubic after the water-absorbent resin particles (A) swollen absorbing water.

(4) A water-swellable waterproof sealant as described in (1), wherein said polyhedron (B) is provided with a stitch on the side.

(5) A water-swellable waterproof sealant as described in (1), wherein the inside of said polyhedron (B) is partitioned into a plurality of rooms, at least one of the rooms being a closed chamber and the rest of the rooms being an open chamber leading to the outside of the polyhedron (B), said water-absorbent resin particles (A) being sealed within said closed sealed chamber, said open chamber being provided with a feeding mouth in order to feed a heavy solid thereinto.

(6) A water-swellable waterproof sealant as described in (1), wherein said water-absorbent resin particles (A) has an average particle diameter of 100 - 850 $\mu$m, a rate of swelling of 3 - 50 seconds, a water absorbency of 20 - 1,000 g/g, a ratio of a water retention to water absorbency of 0.55 - 1.00, a gel modulus of $2 \times 10^3$ - $12 \times 10^3$ N/m$^2$, a water soluble content of not more than 30% by mass, a residual water soluble monomer content of not more than 500 ppm, and a blocking resistance to moisture of not more than 9%.

(7) A water-swellable waterproof sealant as described in (1), wherein it takes 0.5 - 5 minutes to increase the weight of said water-swellable waterproof sealant by 15 kg when immersed in deionized water.

(8) A waterproof sealant formed by water-absorption of said water-swellable waterproof sealant.

**Best Mode for Carrying out the Invention**

(Water-absorbent resin particles)

Suitable water-absorbent resin particles (A) in the present invention include, for example, particulate ones of water-absorbent resins listed in (1) to (5) below, among which preferred are those having an average particle diameter of 100 - 850□, a rate of swelling of 3 - 50 seconds, a water absorbency of 20 - 1,000 g/g, a ratio of a water retention to water absorbency of 0.55 - 1.00, a gel modulus of $2 \times 10^3$ - $12 \times 10^3$ N/m$^2$, a water soluble content of not more than 30% by mass, a residual water soluble monomer content of not more than 500 ppm, and a blocking resistance to moisture of not more than 9%.

(1) Water-absorbent resins, obtainable by polymerizing, as essential components, a polysaccharide (a-1), such as starch or cellulose, and/or a monosaccharide (a-2), one or more monomers (b) selected from a water-soluble monomer and/or a monomer which become water-soluble by hydrolysis, and a crosslinking agent (c), optionally followed by hydrolyzing the polymerized product.

Suitable polysaccharides (a-1) include sucrose, cellulose, carboxymethyl cellulose (CMC), starch and the like; and suitable monosaccharides (a-2) include pentaerythritol, diglyerol, sorbitol, xylitol, mannitol, dipentaerythritol, glucose, fructose and the like.

Suitable monomers (b) include, for example, radical-polymerizable water soluble monomers having carboxyl, sulfonic or phosphoric group, and salts thereof; and radical-polymerizable water soluble monomers having hydroxyl, amido, tert-amino or quaternary ammonium salt group.

Suitable radial-polymerizable water soluble monomers having carboxyl group include, for example, unsaturated monocarboxylic or polycarboxylic (dibasic to hexabasic) acids, such as (meth)acrylic acids (representing acrylic acid and/or methacrylic acid; similar expressions being used hereinafter), maleic acid, monoalkyl (C1-9: containing 1-9 carbon atoms) maleate, fumaric acid, monoalkyl (C1-9) fumarate, crotonic acid, sorbic acid, itaconic acid, monoalkyl (C1-9) itaconate, itaconic acid glycol monoether, cinnamic acid, citraconic acid, monoalkyl (C1-9) citraconate, and the like; as well as anhydrides thereof, such as maleic anhydride.

Suitable radical-polymerizable water-soluble monomers having sulfonic group include, for example, aliphatic or aromatic vinylsulfonic acids, such as vinylsulfonic acid, allylsulfonic acid, vinyltoluenesulfonic acid and styrenesulfonic acids; 2-hydroxy- 3-(meth)acryloxypropylsulfonic acids; (meth)acrylalkylsulfonic acids, such as sulfoethyl (meth)acrylates and sulfopropyl (meth)acrylates; (meth)acrylamidoalkylsufonic acids, such as 2-acrylamido-2-methylpropanesulfonic acid, and the like.

Suitable radical-polymerizable water-soluble monomers having phosphoric group include, for example, hydroxylalkyl (meth)acrylate monophosphates, such as 2-hydroxyethyl(meth)acryloyl phosphates, phenyl-2-acryloyloxyethyl phosphate and the like.

Salts of the above water-soluble monomers having carboxyl, sulfonic or phosphoric group include, for example, alkaline salts, such as sodium and potassium salts; alkaline earth salts, such as calcium and magnesium salts; and amine salts or ammonium salts.

There may be mentioned amido-containing monomers, such as (meth)aryl-amides; tert-amino-containing monomers such as dimethylaminoethyl (meth)acrylates and diethylaminoethyl (meth)acrylamide; quaternary ammonium salt group-containing monomers, for example, quaternarized products of a tert-amino containing monomer as above, such as ones quaternarized with a quaternarizing agent such as methyl chloride, dimethyl sulfate, benzyl chloride, dimethyl carbonate, etc.; epoxy-containing monomers, such as glycidyl (meth)acrylates; and other monomers, such as 4-vinylpyridine, vinylimidazole, N-vinylpyrrolidone and so on.

Two or more kinds of these monomers can be used in combination. Among these, preferable water-soluble monomers are radical-polymerizable water-soluble monomers having carboxyl group and salts thereof. More preferred are unsaturated mono- or polycarboxylic acids and salts thereof, particularly (meth)acrylic acids and salts thereof.

Suitable crosslinking agents (c) include, for example, crosslinking agents having two or more radical-polymerizable unsaturated groups, ones having a radical-polymerizable unsaturated group and a reactive functional group, and ones having two or more reactive functional groups.

Illustrative examples of compounds having two or more radical-polymerizable unsaturated groups include N,N'-methylenebis(meth)acrylamides, ethylene glycol di(meth)acrylates, polyethylene glycol di(meth)acrylates, propylene glycol di(meth)acrylates, glycerol (di- or tri)acrylates, trimethylolpropane triacrylate, triallylamine, triallyl cyanurate, triallyl isocyanurate, tetraallyoxyethane and pentaerithyltol triallyl ether.

Compounds having at least one radical-polymerizable unsaturated group and at least one functional group reactive with functional group in (a) and/or (b) include, for example, hydroxyethyl (meth)acrylates, N-methylol(meth)acrylamides, glycidyl (meth)acrylates and the like.

Specific example of compounds having two or more functional groups reactive with the functional group in (a) and/or (b) includes polyhydric alcohols, such as ethylene glycol, diethylene glycol, glycerol, propylene glycol and trimethylolpropane; alkanolamines, such as diethanolamine; and polyamines, such as polyethyleneimines.

Two or more kinds of these crosslinking agents can be used in combination. Among these, preferred are copolymerizable crosliking agents having two or more radical-polymerizable unsaturated groups, particularly N,N'-methylenebis(acryl- amide), ethylene glycol diacrylate, trimethylpropane triacrylate, tetraallyloxyethane, pentaerythritol triallyl ether and triallylamine.

Ratio of the components (a), (b) and (c) and manufacture method of water-absorbent resins are not particularly limited. Specific examples of water-absorbent resins may include ones described in JP-A-52-25886, JP-B-46199/1978, JP-B46200/1978 and JP-B-21041/1980.

(2) Ones obtainable by polymerizing the components (a) and (b) as above, for example, hydrolyzed products of starch-acrylonitrile grafted copolymer, and hydrolyzed products of cellulose-acrylonitrile grafted copolymer.

(3) Crosslinked products of the components (a) as above, for example, crosslinked products of carboxymethyl cellulose.

(4) Copolymers of the components (b) and (c) as above, for example, partially hydrolyzed products of crosslinked polyacrylamide; crosslinked acrylic acid-acrylamide copolymers; crosslinked polysulfonic acid salts, such as crosslinked sulfonated polystyrenes; crosslinked polyacrylic acid salt/polysulfonic acid salt copolymers; saponified products of vinyl ester-unsaturated carboxylic acid copolymers, such as ones described in JP-A-52-14689 and JP-A-52-27456; crosslinked polyacrylic acids (salts); crosslinked acrylic acid-acrylate ester copolymers; crosslinked isobutylene-maleic anhydride copolymers, crosslinked polyvinylpyrrolidones, and crosslinked carboxyl-modified polyvinyl alcohols.

(5) Polymers of self-crosslinkable polymer of the component (b) as above, for example, self-crosslinkable polyacrylic acid salts.

Two or more kinds of water-absorbent resins as mentioned above can be used in combination.

Among these water-absorbent resins, preferred are, within the ones exemplified in the above (1) and (4), crosslinked polyacrylamide copolymers, crosslinked polyacrylic acids (salts), crosslinked acrylic acid-acrylate ester copolymers and crosslinked carboxyl-modified polyvinyl alcohols.

In case of water-absorbent resins in the form of neutralized salts, kind of the salt and degree of neutralization are not particularly limited. Preferable kinds of the salt are alkaline salts, particularly sodium and potassium salts. Preferable degree of neutralization to the acid group is 50-90 mole%, especially 60-80 mole%.

In case of ones exemplified in the above (1) and (4), crosslinking agent is used in an amount of preferably 0.001-5% by mass, more preferably 0.05-2% by mass, particularly 0.1-1% by mass, based on the total mass of water-soluble monomer and crosslinking agent. When the amount of the crossliking agent is less than 0.001% by mass, water-absorbency and water-retention as major functions of water-absorbent resin become low, gel after water-absorption tends to contain more water-soluble components, and the resin contains more residual water-soluble monomer. Furthermore, the water-containing gel polymer after polymerization is difficult to dry, resulting in poor productivity. On the other hand, when the amount of the crosslinking agent exceeds 5% by mass, the resin is crosslinked too much, resulting in reduced water-absorbency and water-retention and slow water-absorption rate.

In manufacturing water-absorbent resins, polymerization methods are not particularly limited, and include, for example, aqueous polymerization method, reverse phase suspension polymerization method, spray polymerization method, photo-initiation polymerization method and a radiation polymerization method.

Preferable polymerization method is aqueous polymerization method using a radial polymerization initiator. In this case, kind and amount of radical polymerization initiators and conditions of radical polymerization are not particularly limited, and ordinary conditions may be used. Furthermore, there may be added optionally various additives, chain transfer agent (such as a thiol compound) and the like to the polymerization system.

Water-absorbent particles, prepared by drying water-containing gel polymer of water-absorbent resin obtained by polymerization, followed by crushing the polymer and optionally adjusting particle size, may be surface-crosslinked with a crosslinking agent having at least two functional groups reactive with acid group such as carboxyl group and/or salt group thereof, whereby the surface and the neighbourhood of the particles are crosslinked to yield water-absorbent resins.

Water-absorbent resins thus surface-crosslinked are particularly suitable for use in this invention; because they have excellent absorbency and absorption rate as well as high gel strength, not only under atmospheric pressure but also under pressure.

As crosslinking agent for surface-crosslinking, there may be applied any of known crosslinking agents conventionally used. Specific examples include polyglycidyl ether compounds having 2-10 epoxy groups per molecule, such as ethylene glycol diglycidyl ether, glycerol-1,3-diglycidyl ether, glycerol triglycidyl ether, polyethylene glycol (degree of polymerization, 2-100) diglycidyl ethers and polyglycerol (degree of polymerization, 2-100) polyglydicyl ethers; divalent to 20 valent polyol compounds, such as glycerol, ethylene glycol and polyethylene glycols (degree of polymerization, 2-100); divalent to 20 valent polyamine compounds, such as ethylenediamine and diethylenetriamine; polyamine resins with a molecular weight of 200-500, such as polyamidepolyamine-epichlorohydrin resins and polyamine-epichlorohydrin resins; alkylene carbonates, such as ethylene carbonate; aziridine compounds, oxazoline compounds, polyimine compounds, and so on.

Among these, polyglycidyl ether compounds, polyamine resins and aziridine compounds are preferred, in view of capability of surface-crosslinking at relatively low temperature.

Amount of crosslinking agent is not particularly limited but may be varied according to the kind of the crosslinking agent, crosslinking conditions and targeted properties of the resin. The amount is preferably 0.001-3% by mass, more preferably 0.01-2% by mass, particularly 0.05-1% by mass, based on the weight of water-absorbent resin. When crosslinking agent is used in an amount of less than 0.001 % by mass, the resulting resins have no practical difference in properties with ones without surface-crosslinking. On the other hand, the amount exceeding 3% by mass is not preferred, because of tendency to lower absorbency.

Drying and crushing can be carried out as follows. In case of aqueous solution polymerization, a water-containing gel obtained by polymerization is, for example, cut into small pieces or converted to a noodle-like form to some extent with a primary crusher, such as a meat chopper or a cutter, and neutralized with an alkali metal hydroxide if needed, and then dried by permeation drying or through-flow drying. Among them, permeation drying is preferred since it is capable of effectively drying within a short period of time. On the other hand, in case of reverse phase suspension polymerization, methods to dry water-containing gel include a general method by carrying out solid-liquid separation such as decantation to separate water-containing gel after polymerization from organic solvent, followed by drying the gel under vacuum (degree of vacuum; roughly 100-50,000 Pa) or by through-flow drying. Other drying methods for water-containing gel after aqueous polymerization include, for example, contact drying method, as described in JP-A-8-28216, through drawing under compression water-containing gel a drum drier. This method, however, requires to form a thin film of the water-contained gel on the drum for drying, since water-containing gel has poor thermal conductivity. Drying temperature, which may be varied with type of the dryer and a drying time used, is preferably 50-150°C, more preferably 80-130°C. Drying time is also varied with type of the dryer and drying time, but preferably 50-300 minutes, more preferably 5-120 minutes. Dried products of crosslinked polymers thus obtained can be crushed into particles if needed. Crushing methods include usual ones, for example, impact milling (using pin mills, cutter mills, screen mills, AMC pulverizers, etc) and air milling (using air jet mills). Dry particles, optionally dried, are sieved by a classifier (a vibratory classifier, a centrifugal classifier or the like) equipped a desired screen if needed to collect dry particles with a desired particle diameter.

Water-absorbent resin particles (A) thus obtained have an average particle diameter of preferably 100-850 $\mu$m, more preferably 100-700 $\mu$m. Water-absorbent resin particles, having an average particle diameter of 100 $\mu$m or more, are capable of resisting leaking from the water-swellable waterproof sealant before water-absorption and resisting generating uneven segregation and reducing a rate of swelling. Water-absorbent resin particles having an average particle diameter of 850 $\mu$m or less provide sufficiently high rate of swelling. Average particle diameter can be controlled by milling and sieving as mentioned above. In case of reversed phase suspension polymerization, average particle diameter can be controlled by polymerization conditions. The average particle diameter herein means mass-average particle diameter. Mass-average particle diameter is determined by the particle diameter occupying 50% of the total mass in the plot, where the particle diameter and the content based on the mass are plotted in the x-axis and y-axis, respectively, on a logarithmic probability paper for particle size distribution of crosslinked polymer obtained by usual sieving method.

Water-absorbent resin particles (A) have a rate of swelling of preferably 3-50 seconds, more preferably 5-40 seconds, particularly 5-35 seconds. Water-absorbent resin particles, having a rate of swelling of 3 seconds or more and 50 seconds or less, are capable of blocking water penetration quickly.

(Method to Measure a Rate of Swelling)

Water-absorbent resin particles (A) is sieved by a screen passing 30 mesh particles and retaining 140 mesh particles to collect as a measurement sample. Fifty ml of a physiological saline solution (0.9% by mass aqueous sodium chloride solution, 25°C) is put into a 100 ml beaker and stirred with a magnetic stirrer at 600 rpm. Then, 2.00 g of the sample is added within vortex of the solution under stirring. After addition, the sample absorbs water to swell and the vortex flow is weakened and then disappears to level the liquid surface flat. The time (in second) required for levelling the liquid surface after addition is defined as rate of swelling.

Rate of swelling can be increased by enlarging surface area of water-absorbent resin particles (for example, amorphous shape rather than sphere) or by blending silica powder to promote quicker access of water to water-absorbent resin.

Water-absorbency is preferably 20-1,000 g/g, more preferably 80-600 g/g. Water-absorbency of 20 g/g or higher is efficient, since waterproof sealant after water-absorption can retain sufficiently high volume. When water-absorbency is 1,000 g/g or less, gel strength after water-absorption is high enough to provide good stability of stacked waterproof sealants. Water-absorbency can be controlled by selecting various manufacturing conditions for water-absorbent resins.

Ratio of water-retention to water-absorbency is preferably 0.55-1.00, more preferably 0.65-1.00. When a ratio of water-retention to water-absorbency is 0.55 or higher, stacked waterproof sealants do not leak water therefrom, and maintain good stability, without collapsing. Ratio of water-retention to water-absorbency can be controlled by selection of kind of monomers and crosslinking conditions.

Water-absorbent resin particles (A) have, in addition to the above properties, a gel modulus in case of absorbing a physiological saline solution, as measured with a creepmeter, within the range of preferably $2 \times 10^3$ - $12 \times 10^3$ N/m$^2$, particularly $2.2 \times 10^3$ - $6 \times 10^3$ N/m$^2$. When gel modulus is $2 \times 10^3$ N/m$^2$ or more, stacked waterproof sealants do not occur deformation of gel by its weight, and provide reduced tendencies of collapsing of stacked waterproof sealants and gel leaking therefrom. When gel modulus is $12 \times 10^3$ N/m$^2$ or less, swollen waterproof sealants, after absorbing water, do not become too hard, and effectively prevent or reduce water leak, without forming any gap between aligned waterproof sealants. Desired gel modulus can be obtained, for example, by selecting polymerization conditions (balancing molecular weight with crosslinking degree). The gel modulus herein means elastic modulus, as determined by amount of instantaneous deformation by compression when a certain load (stress) is applied to swollen gel of water-absorbent resin particles. Measurement method thereof will be described hereafter.

Water-soluble content is preferably not more than 30% by mass, more preferably not more than 10% by mass, especially not more than 5% by mass. When water-soluble content is not more than 30% by mass, migration of water-soluble components through a cloth to the surface of waterproof sealants is prevented or reduced, and easy handling is attained, without producing slippery feel. Water-soluble content can be controlled by selection of polymerization conditions. Methods to reduce water-soluble content in water-absorbent resins include, for example, method by increasing molecular weight, which method is preferred, and also method by reducing polymer concentration and method by increasing crosslinking density.

It is preferred that water-absorbent resins, which are crosslinked polymers of water soluble monomer, have a residual water-soluble monomer (such as acrylic acid) content in the resin within the range of not more than 500 ppm, particularly not more than 200 ppm, more particularly not more than 100 ppm. When it is not more than 500 ppm, a fear to cause skin itch is reduced even when a personnel sensitive to skin irritation would come in contact with water-absorbent resin. As methods to reduce residual water-soluble monomer (such as acrylic acid) content, method by adding a reducing agent after polymerization has high efficiency; but there may be employed other methods by selection of polymerization conditions, for example, increasing molecular weight of water-absorbent resins as above. Reducing agents include, for example, sodium sulphite, ascorbic acid, amines (such as ammonia and monoethanol amine) and the like. The amount used is preferably 0.001-5% by mass based on the weight of water-absorbent resins.

Water-absorbent resins as above, which have, in addition to the above properties, a blocking resistance to moisture in the range of preferably not more than 9%, particularly not more than 7%, are capable of reducing formation of moisture-solidified clumps even after storage of water-swellable waterproof sealants for a long period of time. Reduced amount of clumps assures sufficient rate of swelling and water-absorbency. Measuring method of blocking resistance to moisture will be described hereafter.

Blocking resistance to moisture can be improved by surface-crosslinking of resin particles or by blending an antiblocking agent. Suitable antiblocking agents include, for example, inorganic antiblocking agents, such as silica, talc, titanium oxide and calcium carbonate, and organic antiblocking agents, such as polyurethane resins, epoxy resins and poly(meth)acrylate resins, having a particle diameter not more than 100$\mu$m. Antiblocking agents other than the ones mentioned above preferably have an average particle diameter of 1-500$\mu$m. Antiblocking agent is preferably formulated in an amount of not more than 50 parts by mass, particularly not more than 30 parts by mass to 100 parts by mass of water-absorbent resin. Antiblocking agent can be formulated in any step in manufacturing of water-absorbent resin.

(Polyhedron)

A polyhedron (B), within which water-absorbent resin particles (A) are sealed, in accordance with the present invention, is manufactured from a flexible and water- permeable sheet. Suitable water-permeable sheets include pre-perforated water- permeable sheets, and, besides, ones becoming water-permeable comprising a perforated sheet laminated with a water-soluble sheet, to be dissolved in water to quickly generate pores for water-permeation. Pore size is not particularly limited as far as water can pass through, but preferably 0.1-5 mm, particularly 0.1-3 mm. Water-permeability, as determined by a time (in second) for 100 ml of deionized water at 25°C to pass through an area of 100 cm$^2$, is preferably at most 30 seconds, more preferably at most 15 seconds, particularly at most 5 seconds.

Suitable forms of water-permeable sheets include, for example, fabrics, such as knit fabrics, woven fabrics and non-woven fabrics; sheets of polyethylene, polypropylene or the like, perforated with many fine pores; and meshed films. Water-permeable sheets preferably have a thickness of 0.1-5 mm. Applicable materials therefor include all fibrous materials, for example, synthetic resins or synthetic fibers of polyester, nylon, acrylic, polyethylene, polypropylene, polystyrene and the like as well as modified products thereof; semi-synthetic fibers, such as rayon and acetate, natural fibers, such as cotton, wool, silk and pulp fibers, as well as blend spinning fibers and interwoven fabrics of these fibers. Sand bags may be formed from water-impermeability bags, provided with an open and close section capable of injecting water therethrough. Size of the open and close section is not particularly limited.

Water-swellable waterproof sealants according to this invention are products comprising said water-absorbent resin particles (A) within a polyhedron (B) composed of a water-permeable sheet. Preferable polyhedrons (B) are ones having a configuration so as to have at least two planar faces upon absorbing water to swell. More preferred are ones having a configuration such that both the top and bottom faces of polyhedrons (B) become substantially planar upon water-absorption. Concrete configurations are not particularly limited as far as both the top and bottom faces become substantially planar. Especially preferred are ones having the same geometry and size in both the top and bottom faces. Geometries of both the top and bottom faces may be any of circular, elliptical, quadrangular, triangular and so on. Particularly preferred are quadrangles, such as square, rectangle, diamond, trapezoid and the like. Most preferred are square and rectangle. In case of polyhedrons having a lateral face, the line of the lateral face connecting the top and bottom is preferably linear upon absorbing water to swell, and more preferably the lateral face is also planar. More preferred are, as the whole shape, polyhedrons forming rectangular solids or cubic shapes after the water-swellable waterproof sealant absorbs water to swell.

In a preferable aspect of this invention, the water-swellable waterproof sealant has a structure, of which the inside of polyhedron (B) is partitioned by divider(s) into a plurality of rooms. Methods of partitioning into rooms, which need to establish complete isolation between rooms, are not particularly restricted with respect to installation means and include, for example, methods by sewing a new cloth within a bag, and methods by sewing directly top cloth and lining of a bag. Since bags and dividers are composed of fibrous materials such as non-woven fabrics, swollen water-absorbent resins after water-absorption do not pass through the divider, but water and air are allowed to freely travel. Dividers have to possess enough strength not to be broken even under severe conditions, and are preferably comprised of the same material as the bag.

At least one among partitioned rooms is a closed chamber, which is wholly surrounded with divider(s) and has no space for a solid to intrude. The rest of the rooms, other than the closed chamber, is an open chamber, which is also surrounded with the bag and divider(s), but a part of the bag is notched to provide a feeding mouth leading to the outside of the bag. This feeding mouth can be used to fill the inside of the open chamber with a heavy solid such as sand. The feeding mouth may have any shape and size. It is preferred that one mouth provided on one side has a size large enough to fill sand with a shovel without difficulty and prevent the sand from run off with water flow. Besides, it is preferred to install each of open and closed chambers in only one location in the bag, though plural open chambers and plural closed chambers may be installed. Shape and size of both open and closed chambers, which are not particularly limited, can be freely selected in accordance with the geometry, size and installed location of water-swellable waterproof sealants.

The closed chamber is not opened to the outside, but filled with water-absorbent resin particles during manufacturing stage of water-swellable waterproof sealants. Since water-absorbent resins are used in a small quantity, water-swellable waterproof sealants can be folded planar and a plurality of water-swellable waterproof sealants can be stacked for storage and transport as being conventionally done. When water-absorbent resins absorb water to swell, the inside of the sealed chamber expands to turn the water-swellable waterproof sealants into the designed shape and fulfill the function as the waterproof sealant.

Since swollen water-absorbent resins have a same level of specific gravity as water and buoyancy arises in water, they could be washed out with water flow. It is preferred to increase the weight further in order to resist strong water flow. The open chamber of the polyhedron can be filled with a heavy solid having a specific gravity higher than water, such as a sand, a gravel, a brick, a concrete block, a metal block or the like. The weight of waterproof sealants can be increased by filling the open chamber, of the swollen waterproof sealant according to the present invention, through the feeding mouth, with sands collected from vicinities.

In addition, stacked waterproof sealants may be fixed with a stake driven from the top of an open chamber. In this case, the lower portion of the waterproof sealant, where the stake passes through, is the open chamber. If the stake is driven into a closed chamber, the bag bursts to discharge the swollen water-absorbent resin within it to the outside, resulting in no functionality of the waterproof sealant. Through driving the stake in the open chamber, both the top and bottom waterproof sealants are integrated to make it possible to cope with a strong water flow. Through providing openings or the like for a string to tie with every edges of the waterproof sealants, it is possible to tie the waterproof sealants from side to side and up and down, with the string; whereby it is made possible to cope with a substantially stronger water flow. In driving the stake, the open chamber can be opened up and down, that is, penetrate through up and down. In this case, the stake can be easily penetrated through the open chamber into the ground beneath it.

Methods to manufacture water-swellable waterproof sealants are not particularly limited as far as the final product has a geometry as above. A water-permeable sheet as above is cut into ones to be further processed for the top, bottom and lateral sides of a polyhedron. Suitable processing methods, depending on the water-permeable sheet materials, include, for example, sewing stitching, heat sealing and adhesive sealing. Before complete sealing, a water-absorbent resin as above is sealed within the water-swellable waterproof sealant. Size of water-swellable waterproof sealants is not particularly limited, but is preferably 20-50 cmx40-80 cm with a height of 10-30 cm, particularly 30-45 cmx45-70 cm with a height of 15-25 cm, in the swollen state.

Furthermore, polyhedrons (B) are preferably provided with a stitch on each side. Addition of the stitch can reinforce each side (edge) and improve planarity of each face of the polyhedron after water-absorption to swell. Methods of providing the stitch on each side are not particularly limited, but includes, for example, pinching the side segment (edge), folding the polyhedron, or attaching a core material such as a cover cloth or paper to the side segment, followed by sealing with an adhesive, heat or sewing, while depending on properties of the water-permeable cloth. Among them, sewing is preferred, where the direction of the seam is not particularly limited, but sewing can be done in one or more linear or zigzag line or a lattice pattern along the side. Methods to sew are not particularly limited, but it is preferred to use a sewing machine. Stitching width and sewing margin in sewing products are not particularly limited, but preferably 3-30 mm. When the margin is at least 3 mm, two faces pinching the stitched side readily turn to planar after water-absorption to swell. When the margin is 30 mm or less, the presence of the stitch in the gap between waterproof sealants does not reduce the efficiency of waterproof sealants when several water-swellable waterproof sealants are aligned or stacked after water-absorption to swell. Length of each side mentioned above is preferably at least 30% of the length in the side of the polyhedron, more preferably at least 70%, particularly 100%.

Bags for waterproof sealants, provided with an antiskid member on the surface, do not slip themselves to collapse, when the waterproof sealants are stacked. Specific forms of antiskid members include, for example, spherical protrusions of a natural or synthetic rubber aligned at a certain interval on the bag, and rubber plates glued to the bag. Suitable examples include ones described in Japan Utility Model Registration No. 3083868.

In charging water-absorbent resin particles (A) into said polyhedron, there are two methods of (a) directly charging the polyhedron with powders of the water-absorbent resin, and (b) charging the polyhedron with gelling materials (smaller than the polyhedron) prepared beforehand by charging water-permeable bags with the water-absorbent resin. The method (b) is preferred.

In case of the method (a), a bag for water-swellable waterproof sealant open at one end, for example, is formed from a sheet as above, followed by adding water-absorbent resin particles into the bag through the open end and then sealing the open end. Since water-swellable waterproof sealant bags should not be broken even after swollen with water, bags for water-swellable waterproof sealants generally sealed with sewing or adhesion.

In case of the method (b), bags for gelling materials may be, for example, water-degradable bags, water-soluble bags or bags having a closed segment, which can be opened on contact with water. Water-degradable papers include, for example, papers formed by bonding pulp fibers of paper with a water-soluble or hydrophilic sizing agent, a water swellable polymer or the like, so as to be degraded into bits and pieces on contact with water (such as "Dissolve WA" produced by Mishima Paper Co. Ltd.) and the modified paper of this paper with a heat-sealant to impart processability (heat adhesiveness) (such as "Dissolve WAP" produced by Mishima Paper Co. Ltd.). These papers degrade quickly when water is absorbed.

Water-soluble sheets (films) to form water-soluble bags include sheets (films) formed with water-soluble polymers as described below, such as water-soluble polyvinyl alcohol (POVAL) films, starch films and carrageenan films. These have a good sheet (film) strength in dry state, while being slower in dissolving

(degrading) with water than water-degradable papers. There may be used laminated sheets of water-degradable paper glued to water-soluble film, which include sheets adhering and laminating at least one water-degradable paper and water soluble film (such as "Dissolve WAL" produced by Mishima Paper Co. Ltd, prepared by gluing a POVAL film to the above "Dissolve WA"). Laminated sheets are quickly dissolved (degraded) with water and still stronger in the film strength. Bags, having a closed segment to be opened on contact with water, may include ones, at least a part of which is sealed with a water-soluble polymer and the bags are ones (sheet) permeable with water. Materials for water-permeable sheets can be the same as the ones mentioned previously. Preferred are hydrophilic materials, such as cotton, jute, pulp fibers, nylon and the like.

Methods of sealing with water-soluble polymer include a method placing a water-soluble polymer between a seal segment of at least a part of water-permeable sheets and then seal it.

Water-soluble polymers are not particularly limited as far as water-soluble after adhesion of the sheet by sealing. Preferred are one having a weight-average molecular weight of 1,000-1,000,000, more preferably 2,000-500,000, particularly 5,000-200,000. When the weight average molecular weight is at least 1,000, the adhesion strength is high enough to prevent the sealed segment from peeling in transport and operation. When the weight average molecular weight is not more than 1,000,000, the polymer is quickly dissolved with water to rapidly swell the water-absorbent resin particles (A). The specific examples include ones (1)-(3) listed below.

(1) Synthetic polymers

Polyvinyl alcohol (POVAL, the degree of saponification is not limited as far as soluble in water, but preferably 70-90 mole%, most preferably 75-90 mole%), polyacrylamide, a water soluble acrylic resin (a homo- or co-polymer of a water soluble monomer such as sodium acrylate and hydroxyethyl acrylate), a water soluble polyurethane resin (a reaction product of a polyisocyanate such as isophorone diisocyanate and hexamethylene diisocyanate with a polyol of polyethylene oxide with a molecular weight of 400-4,000 etc), a water soluble epoxy resin (a reaction product of a polyol of polyethylene oxide with a molecular weight of 400-4,000 with a polyepoxide such as ethylene glycol diglycidyl ether etc), polyethyleneimine, polyethylene oxide and polyvinylpyrrolidone etc.

(2) Semi-synthetic polymer

Celluloses such as carboxymethyl cellulose, methyl cellulose, hydroxyethyl cellulose etc and starches such as oxidized starch, denatured starch etc.

(3) Natural polymer

Starches such as corn starch, wheat starch, tapioca starch, potato starch, saccharides such as Kojac mannan, pectin etc, seaweeds such as gluten glue, agar, sodium alginate, plant viscous substances such as gum Arabic, guar gum, locust bean gum, carrageenan, sunset hibiscus, tragacanth gum etc, microorganisms induced viscous substances such as dextran, pulran etc and proteins such as hide glue, gelatin, casein etc.
Among them, the synthetic polymer is preferred and polyvinyl alcohol is particularly preferred.
A form of sealing with these materials includes, for example, one chosen from a water soluble film, a water soluble coating agent and a sizing agent. The water soluble film and water soluble coating agent are preferred and the water soluble film is particularly preferred.
As the water soluble film, the water soluble thermoplastic film is preferred. The weight average molecular weight of this material is preferably 5,000-1,000,000 and most preferably 10,000-500,000. Thickness of the sheet is not particularly limited, but preferably 10$\mu$m 0-3 mm, most preferably 50$\mu$m-2 mm. The water soluble coating agent used includes the water soluble polymer with a weight average molecular weight of preferably 1,000-500,000, most preferably 5,000-200,000. The water soluble adhesive is also included in this class. The concentration of the coating agent is not limited as far as the agent can be applied with a brush or roller, but preferably 10-100% by mass. A solvent (aromatic hydrocarbons such as toluene, xylene etc, ketones such as acetone, methyl ethyl ketone etc, esters such as methyl acetate, ethyl acetate, etc and alcohols such as methanol, ethanol, isopropanol etc) or water can be used to dilute the coating agent. The powder of the coating agent can be applied to thermally fuse for the adhesion. Furthermore, the resin can be either unreactive or reactive such as a urethane or epoxy type resin. An amount of the coating agent applied is preferably 0.1-50g/m$^2$ as the solid weight, most preferably 0.2-20 g/m$^2$. The sizing agent includes the water soluble polymer with a weight average molecular weight of preferably 800-300,000, most preferably 3,000-150,000.
The concentration and applied amount of the sizing agent are similar to the one for the coating agent.
A method to manufacture the above gelling material is not particularly limited. Two sheets may be stacked to seal to a bag for the gelling material bag or three sheets may be stacked to convert to a bag. A bag with an open segment is filled with the water-absorbent resin and the open segment is then sealed to form the bag. When the water degradable, water soluble sheet (film) is used in manufacture of the bag, sewing or adhesion can be used to seal because the bag surface is degraded (dissolved). When the water soluble polymer is used in manufacture of the bag, a sealing method includes the one to remove a part of the sheet, seal the seat, then fill with the water-absorbent resin and finally seal the rest of the sheet or the one to place the water-absorbent resin on the sheet and then seal its surroundings.
When the sheet is sealed with the water soluble polymer, a method to seal is not particularly limited as far as the sealed section does not peel during transport or handling of the gelling material, but generally includes heat sealing (thermal fusion) and pressure bonding. The temperature in the thermal fusion is 50-300°C, preferably 70-200°C. The pressure in pressure bonding is 0.1-10 kg/cm$^2$, preferably 0.5-5 kg/cm$^2$. Among them, the preferred method is the heat sealing. The heat sealing is generally performed under pressure. Its condition is similar to the one described above. This heat sealing is used to bond two sheets, between which the above water soluble polymer is placed. The bonding strength of the sheet is at least 0.1 kgf/25 mm, preferably at least 0.2 kgf/25 mm. The bonding is strong enough not to pee the sealed section does not peel during transport. The bonding strength can be measured by the method described below.

Bonding strength

An apparatus to determine the bonding strength is used to measure the peel strength (180 degrees peel strength, pulling rate of 100 mm/min, unit; kgf/25 cm).

When the water soluble film or coating agent is used, one side of the sheet is laminated with the film or applied with the coating agent and the laminated or coated side of two sheets may face inwards to seal or the film laminated or coated side of one sheet lies on other sheet to seal. Or the film may be inserted between two sheets to seal. When the coating agent is used, the coated sheet may be sealed before drying. When the sizing agent is used, a similar method may be used for sealing, but preferably the sizing agent is applied to only the sealing section. After the sizing agent is placed between two sheets or applied to one or both sides of the sheet, the surface of the sheet applied with the sizing agent faces each other to seal. A combination of these methods is also possible. Among them, a preferred method is the one to seal two film laminated sheets together or two coating agents applied sheets together. These methods are efficient in workability.

After filling with the water-absorbent resin, the sheet is sealed at the edge to yield a bag, where a percent of the length of the sealed segment of the bag by the water soluble polymer in the present invention to that of the total circumference of the bag is preferably at least 25%, more preferably at least 50%, further more preferably at least 75% and most preferably 100%. When the percent is at least 25%, the water-absorbent resin is exposed to the outside in a short period of time after unsealing the sealed section. The rest of circumference segment not sealed with the water soluble polymer is not particularly limited, but may be sealed or sewn with a water insoluble sealing material (generally polyethylene sheet or polypropylene sheet etc). The width of sealed segment is not particularly limited as far as the water-absorbent resin does not leak in handling, but preferably 1-30 mm, most preferably 5-15 mm.

The area of the water permeable sheet occupying the total area of the sheet used in the bag for the gelling material is preferably at least 25%, more preferably at least 50%, further more preferably at least 75% and most preferably 100%. When the area is at least 25%, the amount of water is fed fast enough for the water-absorbent resin to absorb. The sheet used for the bag other than the water permeable sheet indicates the non-water permeable sheet herein and then the sheet without an opening for water to flow as described above or the one with an opening and permeability but not passing water. The material for this sheet may be the same as the water permeable sheet.

The shape of the bag and sheet for the gelling material can be manufactured according to its application and is not particularly limited, but includes an optional form such as a circular form, a quadrangular form (rectangle, square, diamond, trapezoid etc), and a triangular form and generally the quadrangular form. While the size is not particularly limited, one side of the quadrangle (particularly rectangle) is preferably 5-30 cm long, most preferably 7-20 cm long. When one side is at least 5 cm, the production efficiency of the gelling material is high, whereas when it is not longer than 30 cm, the product is not too big to handle.

The amount of the water-absorbent resin filling in one bag for the gelling material is preferably 0.01-0.5 $g/cm^2$, more preferably 0.05-0.4 $g/cm^2$, and most preferably 0.1-0.35 $g/cm^2$.

When this gelling material is immersed in an aqueous liquid to initiate dissolution of the water soluble polymer as the adhesive in water as well as absorb water penetrated through the water permeable sheet into the bag by the water-absorbent resin to swell, the swelling pressure thereby pushes pushing to extend the adhesion interface of the to readily unseal the sealed section. When the sealed section is unsealed, the water-absorbent resin comes out from the bag to absorb water at once to swell and serve an effect to gel the aqueous liquid.

In addition to the water-absorbent resin particle in the water-swellable waterproof sealant or the one filled in the gelling material, if needed, a deodorant, an aromatic substance, a pesticide, a fungicide, a preservative, an antifoaming agent (alcohol type antifoaming agent, fatty acid ester type antifoaming agent, phosphoric acid ester type antifoaming agent, metal soap type antifoaming agent, mineral oil type antifoaming agent, polyether type antifoaming agent, and silicone type antifoaming agent etc), a foaming agent (inorganic foaming agent such as ammonium carbonate, sodium bicarbonate, nitrourea and organic foaming agent such as dinitrosopentamethylenetetramine, benzenesulfonyl hydrazide, p-toluenesulfonyl hydrazide, azobisisobutyronitrile, azobisformamide etc), anti-blocking agent (for example, inorganic anti-blocking agent such as silica, talc, titanium oxide, calcium carbonate etc and organic anti-blocking agent with a particle diameter not larger than $10\mu m$ such as thermoset polyurethane resin, guanamine resin, epoxy resin, thermoplastic polyurethaneurea resin, poly(meth)acrylate resin etc), a surface active agent, an oxygen scavenger (reducing agent such as white phosphorous, alkaline pyrogallol etc) and an extender (CMC etc) can be added. The amount added is not particularly limited as far as the water-absorbent resin is not prevented from water-absorption to swell, but preferably not more than 50 parts by weight against 100 parts of the water-absorbent resin, more preferably not more than 20 parts by weight, and most preferably not more than 10 parts by weight.

EP 1 741 835 B1

The number of the gelling material to fill the above water-swellable waterproof sealant is preferably 1-10, more preferably 1-6, and most preferably 1-4. When the gelling material is fixed at an identical interval with a double-sided tape to the water-swellable waterproof sealant, it does not move to segregate in transport, but forms a uniform gel when used. The fixed interval is preferably 1-15 cm, most preferably 3-10 cm. A percent of the area of the gelling material occupying the area of the water-swellable waterproof sealant is preferably 10-70%, most preferably 20-50%. This ratio also prevents the water selling waterproof sealant from leaking the gelling material, as the water-swellable waterproof sealant is filled with the water-absorbent resin powder.

This type of the water-swellable waterproof sealant preferably takes 0.5-5 minutes to increase the weight by 15 kg when immersed in water to absorb water to swell. When the time to increase the weight is not longer than 5 minutes, water penetration can be quickly prevented.

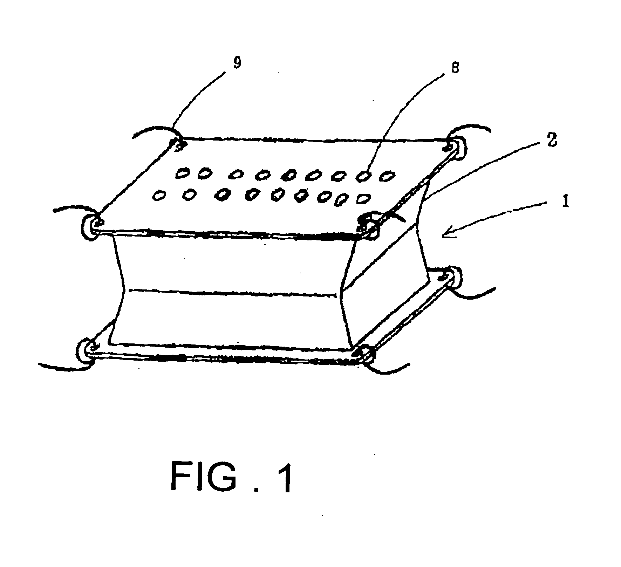

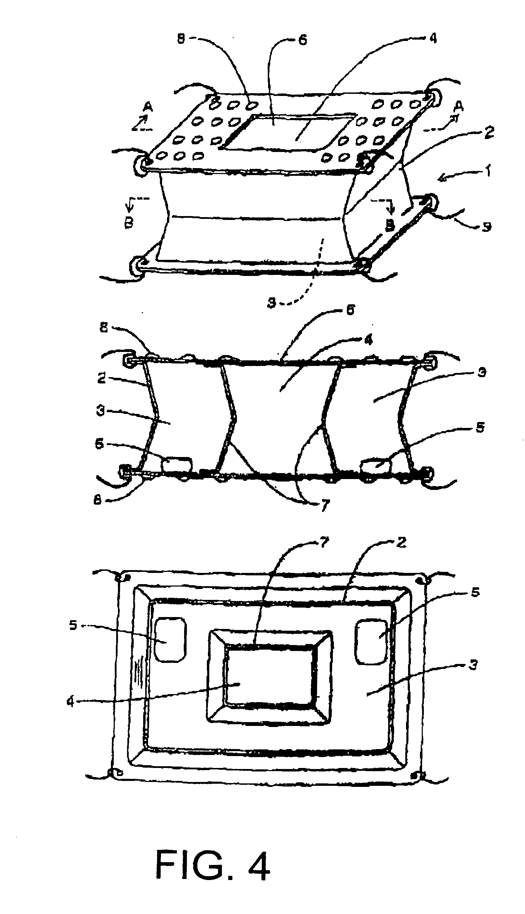

Figures 1 and 4 show an example of the geometry of the water-swellable waterproof sealant in the present invention. The top view in Figure 4 is the top perspective view, the middle one in Figure 4 is a vertical sectional view (A-A section) of the middle part, and the bottom one is the traverse sectional view (B-B section) of the middle part. The polyhedron 2 is formed by sewing the nonwoven fabric into a bag. In this figure for an illustrative purpose, the shape turns into a cube when used. The geometry in Figures 1 and 4 is assumed in a state before use. An inside of the polyhedron 2 is partitioned by the divider 7 into two areas as shown in each sectional view, where as shown in the bottom in Figure 4, the room surrounding the outer circumference of the polyhedron 2 is the sealed chamber 3, whereas other space surrounded by the closed chamber 3 is the open chamber 4.

The sealed chamber 3 is a closed room surrounded by the polyhedron 2 and the divider 7, in which two pieces of the above gelling materials are sealed. The gelling material is fixed with the double-faced tape. On the other hand, the open chamber 4 is provided with the feeding mouth 6 on the top and the heavy solid 10 such as sand can be fed into this feeding mouth to fill the open chamber 4. The feeding mouth 6 is not equipped with a cap, but if needed, may be provided with a detachable or openable and closable cover using a button and face zipper. A hemispherical rubber as an antiskid member 8 is placed in the same interval on both top and bottom of the polyhedron 2, securing enough frictional force with the ground surface or other water-swellable waterproof sealant 1. Furthermore, the polyhedron 2 is provided with a string 9 at the edge as per usual and can be tied with other water-swellable waterproof sealant 1.

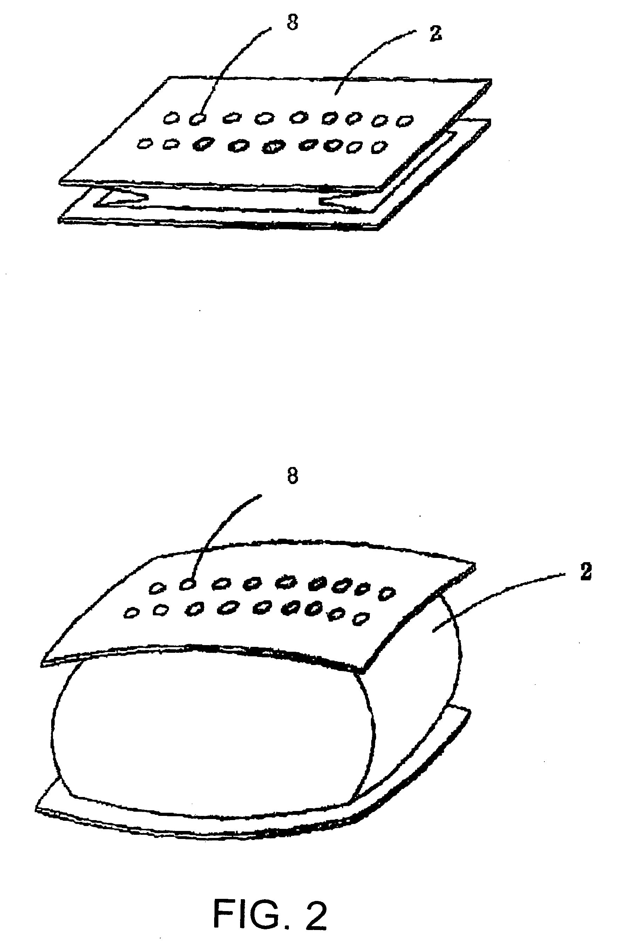

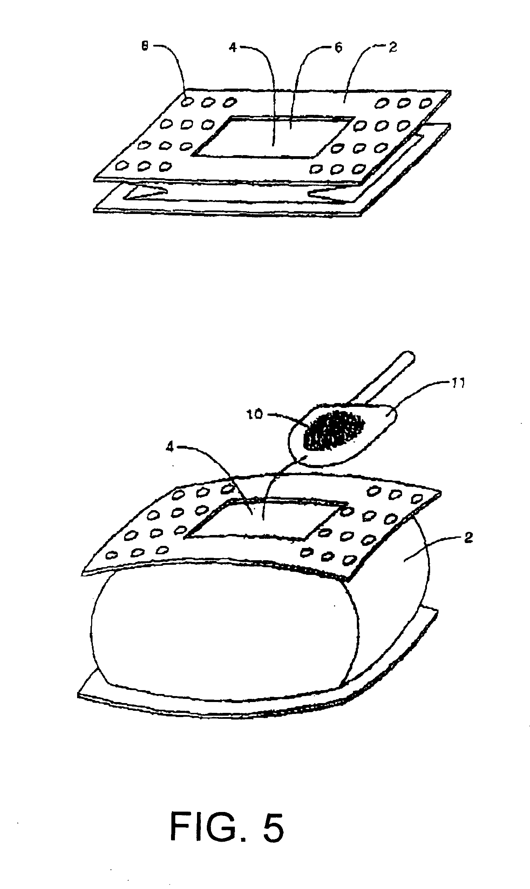

Figures 2 and 5 is the perspective view showing the shape of the water-swellable waterproof sealant 1 in storage and in use, respectively, wherein the top view shows the one in storage, while the bottom view shows the one in use. The water-absorbent resin 5 does not swell when stored and the lateral face of the polyhedron 2 is folded into a dog-leg shape to collapse into a planar form so that many waterproof sealants can be stacked for storage. When used, the water-absorbent resin absorbs water to swell to push and extend the water-swellable waterproof sealant as shown in the bottom view. In the case of Figure 5, this causes the open chamber 4 turning to the cube while keeping the inside hollow, thereby enabling feed of the heavy solid 10 such as sand with a shovel into the feeding mouth 6 to fill.

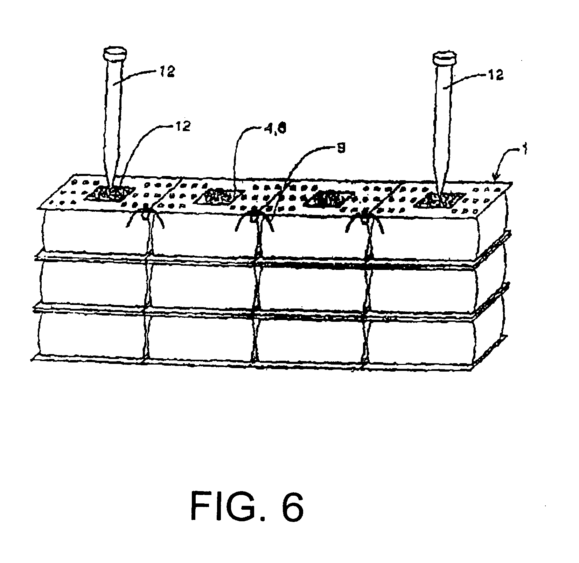

Figure 6 is a perspective view showing a procedure of stacking the waterproof sealant 1, in which a stake 12 is driven from the top, where a plurality of the waterproof sealant 1 is stacked in a form of the stone wall and tied with an adjacent waterproof sealant 1 with a string 9 as well as the stake 12 is driven in only the open chamber of the waterproof sealant 1.

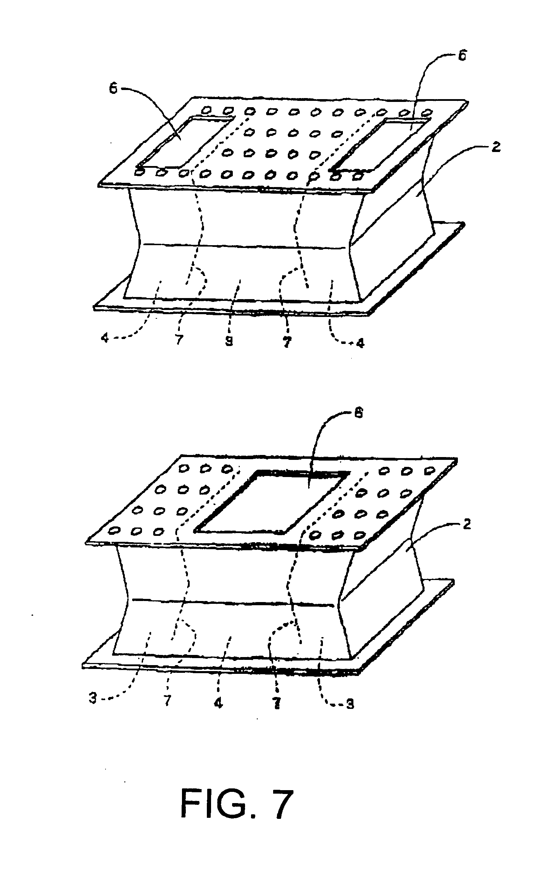

Figure 7 is a perspective view showing an example of configuration of the closed chambers 3 and 4, where the top view is the one with the closed chamber at the center of the polyhedron 2 and the open chamber 4 at both sides of the closed chamber and the divider 7 is constructed at the position shown by the dotted line in Figure 7 to partition the inside of the polyhedron 2. The open chamber 4 is located at both outsides of each divider 7 and the closed chamber 4 is in the middle of both dividers 7 to separate the open chamber apart, so that each chamber is provided with own feeding mouth 6 to make possible a configuration, in which only one of the open chambers 4 is filled with the heavy solid 10 and other is driven with the stake 12, thus dividing their role. Driving the stake 12 in the chamber not filled with the heavy solid 10 can complete the stake driving operation faster. In the bottom view, the polyhedron 2 has a structure, in which the open chamber 4 is placed at the center and the close chamber 3 is provided at both sides of the open chamber to establish two independent closed chambers 3, which are filled with the water-absorbent resin. Keeping a whole area of the center of the polyhedron 2 as the open chamber can increase the volume fillable with the heavy solid 10, enabling a weight increase of the waterproof sealant 1 and thereby coping with a stronger water flow.

In the present invention, the water-swellable waterproof sealant can be used similarly to the conventional sandbag, but is kept in a form of a thin bag until water-absorption and plays a role of the sandbag at first when absorbing water. For example, in flooding and heavy rain, it can suitable for use to prevent rainwater from penetration in order to protect the levee, building and house. The aqueous liquid is not particularly limited as far as it is a water containing liquid. A substance to mix with the aqueous liquid may include a solid such as sand, clay, gravel, inorganic metal oxide, inorganic metal hydroxide, rubber, plastic scrap, glass chip, sawdust, fiber waste, carbon, carbohydrate, protein, solid fat, microorganism, a piece of meat and animal corpse and a liquid but water such as organic solvent, fatty oil, mineral oil, petroleum and surface active agent.

A water percentage in the liquid is not particularly limited, but preferably at least 50% by mass. A specific example of said aqueous liquid includes general water such as rainwater, tap water, well water, river water, pond and lake water, seawater and muddy water and a sludge of the discharged water and effluent from mine, civil engineering and construction work site, paper and pulp plant, fiber and dyeing plant, machine and metal processing plant, ore smelting plant, chemical plant, electrics and electronics related plant, healthcare industry facility such as a hospital, food processing plant, ceramic industry plant, municipal water plant, sewage treatment plant and household. Said aqueous liquid may be in either stationary or flowing state.

Example

In each Example and Comparative Example below, a measurement method of each physical properties and a basis of its evaluation are as follows.

| | |
|---|---|
| Average particle diameter | same as the above-mentioned. |
| Rate of swelling | same as the above-mentioned. |

Water-absorbency

A teabag-shaped package made from a 250 mesh nylon net and having a size of 10 x 20 cm and a heat sealing width within 5 mm and purified water are prepared. The water-absorbent resin is sieved by a JIS standardized screen to collect the particle with 30-100 mesh particle diameter for a test sample.

0.2 g of the sample is added to the teabag-shaped package, which is lowered to immerse in purified water roughly 15 cm deep. After allowing to stand for one hour, the teabag-shaped package is pulled out and vertically hanged for 15 minutes to drain. Then the weight (A g) is determined. An empty teabag-shaped package without the sample is processed similarly to the above to determine the weight (B g). Each measurement is run three times and averaged. The water-absorbency is calculated by the equation of

$$\text{water-absorbency (g/g)} = (A - B)/0.2.$$

Water-retention

A centrifugal machine generating a centrifugal force of 150 G (1,100 rpm, r=10 cm) is prepared. A teabag-shaped package containing the sample after measurement of the water-absorbency is placed on the centrifugal machine and the empty teabag-shaped package is then placed in the diagonal position to the former package. Then the machine is operated to centrifuge at 150 G for 90 seconds. A weight of each teabag-shaped package is determined to calculate the water-retention by the equation of

$$\text{water-retention (g/g)} = (A - B)/0.2.$$

Gel elastic modulus

The water-absorbent resin sieved by a 26-30 mesh screen is immersed in a physiological salt solution to swell 50 times in volume to measure the gel elastic modulus with a creepmeter. The measurement condition is set by a creep analysis program for a computer as follows.

(i) Condition setting for the initial height ($H_0$): 0.01 mm
(ii) Measurement condition for the height under compression ($H_0 - h_1$): 0.01 mm
(iii) Load (stress): 30 g
(iv) Descending speed of a plunger (at the time of measuring the initial height and of compressing): 1 mm/sec
(v) Cross-sectional area

The swollen sample, $0.20 \pm 0.10$ g, is flatly placed on the center of a support table (forming one layer) to measure. Measurement is repeated three times and then averaged. The elastic modulus is calculated by the equation below.

$$\text{Elastic modulus } E_0 = P_0/h_1 / H_0 \quad (N/m^2),$$

where the stress $P_0$ is given by $P_0 = F \times 98/S$ (N/m$^2$),
the load is given by F=30 g,
the cross-sectional area S is given by $S = V_0/(H_0-h_1)$,
$V_0$ is a volume of the sample, $W_0$ is a weight of the sample, and therefore,
the elastic modulus $E_0$ is given by $E_0 = 2940 \times H_0 \times (H_0-h_1)/W_0 \times h_1$.
Content of the water soluble components

10.0 g of the sample is immersed in the purified water in an excess to the water-absorbency and stirred for 24 hours. The mixture is then filtered and the mother liquor is placed in a rotary evaporator to concentrate and then in a constant-temperature bath at 120°C to evaporate to dryness. A residual proportion of the sample after evaporation to the amount of the sample used for the measurement is calculated as a percent by mass.
Amount of residual water soluble monomer
Preparation of the sample solution

One gram of the water-absorbent resin is added to a 300 ml beaker, to which 249 g of 0.9% salt water is added and stirred with a magnetic stirrer for three hours. The water absorbed gel is filtered by a filter paper and the filtrate is used as a test solution.

Measurement

The test solution is injected into a liquid chromatograph to determine the area of the peak by the residual water soluble monomer. A known concentration of the water soluble monomer solution is separately used to prepare a calibration curve (relation between the amount of water soluble monomer and the peak area), from which the amount of residual water soluble monomer is determined.

Blocking resistance to moisture

5.0 g of the water-absorbent resin is placed and almost uniformly spread in an aluminium cup and kept for three hours in a constant-temperature and humidity bath maintained at temperature of 30±0.5°C and relative humidity of 80±1%. The aluminium cup is taken out from the bath and turned upside down on a small JIS standardized screen (12 mesh) to collect the water-absorbent resin on it. In this procedure, a shape of the resin sticking to the aluminium cup is kept intact as much as possible. The small JIS standardized screen is gently shaken 5 to 6 times to fall off the water-absorbent resin on the screen. The blocking part of the water-absorbent resin remained on the screen is weighed to give a percent by mass against a total amount of the water-absorbent resin (5.0 g).

Manufacture Example 1

To a 1 liter beaker were added 230 g of acrylic acid, 133 g of 48% aqueous sodium hydroxide solution, 1.0 g pentaerythritol triallyl ether and 636 g of water, which was cooled to 10°C. The solution was placed in an adiabatic bath, into which nitrogen was introduced to reduce the dissolved oxygen in the solution to 0.1 ppm (measured by Dissolved Oxygen Meter D0220PB from Orient Electric Co. Ltd.) and then 0.023 g of 35% hydrogen peroxide solution, 0.00575 g of L-ascorbic acid and 0.23 g of potassium persulfate were added. Thirty minutes after said addition, polymerization started to reach the maximum temperature of 72°C after roughly two hours. The solution was then aged at this temperature for 5 hours to complete the polymerization. The polymer obtained is a water containing gel product. The polymer obtained was cut into small pieces by a kneader (trade name, BENCH K NEADER PNV-1 from Irie Shokai Co. Ltd.; rotating speed, 70 ppm) for roughly two hours, to which 35.5g of a 50% aqueous sodium hydroxide solution is then added to continue stirring in the kneader for two hours. The polymer was continuously heated at 110°C to dry and then crushed to an average particle diameter of 370μm (measured by trade name Microtrac FRA Particle Size Analyzer from Nikkiso Co. Ltd.). The water-absorbent resin A (i) obtained has the rate of swelling of 28 seconds, an amount of the water absorbed of 550 g/g, a ratio of the water-retention to the water-absorbency of 0.78, the gel elastic modulus of 5 x 10$^3$ N/m$^2$, a content of the water soluble components of 7% by mass, an amount of the residual water soluble monomer of 85 ppm and the blocking resistance to moisture of 7%.

Manufacture Example 2

After the polymer in Manufacture Example 1 was dried and crushed, 2.5 g of finely crushed silica (Silysia® 250 from Fuji Silyisia Chemical Co. Ltd., average particle diameter 2.7 μm) is added and mixed with the polymer uniformly by a Nautor mixer to yield the water-absorbent resin A (ii) with the average particle diameter of 370 μm, the rate of swelling of 21 seconds, an amount of the water absorbed of 550 g/g, a ratio of the water-retention to the water-absorbency of 0.78, the gel elastic modulus of 5 x 10$^3$ N/m$^2$, a content of the water soluble components of 7% by mass, an amount of the residual water soluble monomer of 85 ppm and the blocking resistance to moisture of 3%.

Manufacture Example 3

To a 1 liter beaker were added 0.29 g (0.04 mole) of acrylic acid, 0.33 g of a 48% aqueous sodium hydroxide solution, 278.4 g (1.96 mole) of a 50% aqueous acrylamide solution and 278 g of water, which was cooled to 5°C. The solution was placed in an adiabatic bath, into which nitrogen was introduced to reduce the dissolved oxygen in the solution to 0.1 ppm and then 0.0001 g of a 35% hydrogen peroxide solution, 0.00005 g of L-ascorbic acid and 0.025 g 4,4'-azobis(4-cyanovaleric acid) were added. Thirty minutes after addition, polymerization started to reach the maximum temperature of 75°C after roughly five hours to complete the polymerization to yield a water containing gel polymer.
The polymer obtained was cut into small pieces by a meat chopper, then dried in a band drier (permeation dryer from Inoue Metal Co. Ltd.) at 120°C for 1 hour and crushed to yield a dry powder of the non-crosslinked polymer with an average particle diameter of 500$\mu$m. One hundred grams of this dry powder of the non-crosslinked polymer was added to a stainless steel tray 3 mm thick and heated at 160°C in a hot air circulation dryer for 120 minutes to thermally crosslink. The water-absorbent resin A (iii) obtained has an average particle diameter of 360$\mu$m, the rate of swelling of 32 seconds, an amount of the water absorbed of 88 g/g, a ratio of the water-retention to the water-absorbency of 0.82, the gel elastic modulus of 5.2 x 10$^3$ N/m$^2$, a content of the water soluble component of 5% by mass, an amount of the residual water soluble monomer of 98 ppm and the blocking resistance to moisture of 9%.

Manufacture Example 4

As the water-absorbent resin powder, the water-absorbent resin A (iv) having an average particle diameter of 200□, the rate of swelling of 26 seconds, an amount of the water absorbed of 100 g/g, a ratio of the water-retention to the water-absorbency of 0.7, the gel elastic modulus of 5 x 10$^3$ N/m$^2$, a content of the water soluble component of 1.5% by mass, an amount of the residual water soluble monomer of 50 ppm and the blocking resistance to moisture of 6.5% was prepared.

Comparative Manufacture Example 1

As the water-absorbent resin powder, the water-absorbent resin A (v) of sodium acrylate (containing no silica, non-surface crosslinked) having an average particle diameter of 600 $\mu$m, the rate of swelling of 70 seconds, an amount of the water absorbed of 900 g/g, a ratio of the water-retention to the water-absorbency of 0.8, the gel elastic modulus of 1.8 x 10$^3$ N/m$^2$, a content of the water soluble component of 48% by mass, an amount of the residual acrylic acid of 700 ppm and the blocking resistance to moisture of 10% is prepared.

Comparative Manufacture Example 2

30 grams of acrylic acid was added to a 100 ml flask, to which 58.7 g of 22.6% by mass aqueous sodium hydroxide solution was added dropwise with ice cooling to neutralize 80% of acrylic acid. Next, 0.1 g of potassium persulfate wad added to the solution to dissolve with stirring at ambient temperature. Separately, 163.4 g of cyclohexane and 1.9 g of sorbitol monolaurate were added to a nitrogen padded 500 ml flask with a reflux condenser to dissolve this surface active agent with stirring at ambient temperature. The above mixture in the flask was added dropwise to the latter solution to form a suspension. After the flask is charged with nitrogen to completely remove air, the mixture was heated to 55-60°C at oil bath temperature to continue the reaction at this temperature for three hours. The polymer solution formed was vacuumed to evaporate to dryness, yielding a fine dry polymer particle. The water-absorbent resin A(vi) obtained has an average particle diameter of 250 $\mu$m, the rate of swelling of 65 seconds, an amount of the water absorbed of 120 g/g, a ratio of the water-retention to the water-absorbency of 0.88, the gel elastic modulus of 7 $\times$ 10$^3$ N/m$^2$, a content of the water soluble components of 20% by mass, an amount of the residual acrylic acid of 150 ppm and the blocking resistance to moisture of 4%.

Manufacture Example 5

A polypropylene nonwoven fabric (weight per area, 200g/m$^2$) was cut into a size of 30 cm x 50 cm for the top and bottom of a bag and that of 20 cm x 170 cm for the side, where four hundred pieces of a circular rubber protrusion (2-3 mm high) with a diameter of 1 cm were fused to the nonwoven fabric cut for both top and bottom. Then, the top, bottom and side pieces obtained were sewn to yield a rectangular solid bag, of which a part has an opening..

Comparative Manufacture Example 3

A non-polyhedron bag (roughly 300 g) for the conventional sandbag with a size of 45 cm x 60 cm made from hemp is prepared instead of the above rectangular solid bag.

Examples 1-4

Two hundred grams of the water-absorbent resins A(i)-A(iv) obtained in Manufacture Examples 1-4 described above were sealed in the rectangular solid bag obtained in Manufacture Example 5 to yield the rectangular solid water-swellable waterproof sealants B(i)-B(iv).

Example 5

A POVAL® (PVA) film (CP-1220T10 from Kuraray Co. Ltd.; degree of saponification, 87-89%) with thickness of 30 $\mu$m was laminated to a nonwoven fabric made from a dry wood pulp web (Havix JS45HD-W from Havix Co. Ltd.) to form a sheet (a), which was cut into a rectangle with a size of 10 x 15 cm. Two PVA laminated sheets were stacked such that the PVA layer faces each other and three edges (sides) were heat-sealed to yield a bag. Fifty grams of the water-absorbent resin A (i) was added to this bag, the opening of which was heat-sealed (sealed) to yield the gelling material. As similar to Example 1, four pieces of the gelling materials were placed apart at the same interval in the rectangular solid bag obtained in Example 5 and fixed with a double-faced tape, and then the opening was sewn to yield the rectangular solid water-swellable waterproof sealant B(v).

Comparative Example 1-2

In Example 1, the rectangular solid water-swellable waterproof sealants B(vi)-B(vii) were obtained similarly as Example 1 except the water-absorbent resins A(v)-A(vi) obtained in Comparative Manufacture Examples 1-2 was used instead of the water-absorbent resin A i).

Comparative Example 3

In Example 1, the water-swellable waterproof sealant B(viii) was obtained similarly as Example 1 except a conventional non-polyhedron bag for the sandbag obtained in Comparative Manufacture Example 3 was used instead of the above rectangular solid water-swellable waterproof sealant.
Test Example.
Following tests were carried out for the water-swellable waterproof sealants B(i)-B(v) in Examples 1-5 described above and those B(vi)-B(viii) in the Comparative Examples 1-3. The results are shown in Table 1.

Test Method

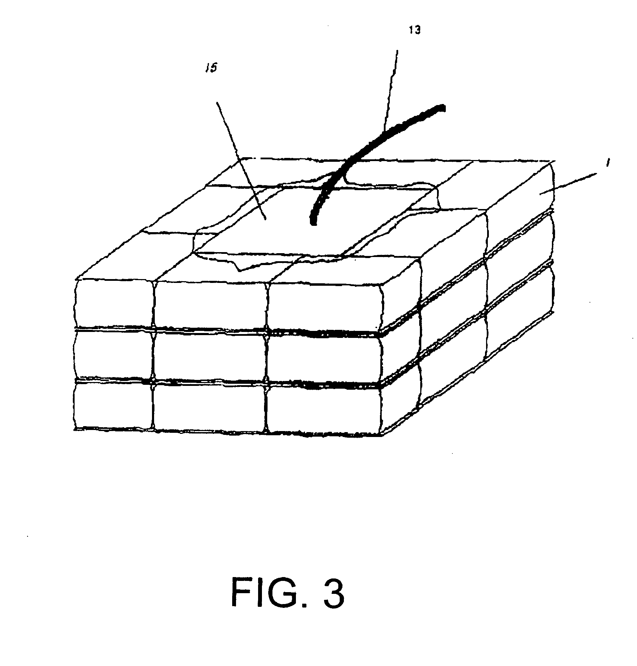

(i) Swelling time in water-swellable waterproof sealant: The water-swellable waterproof sealant is immersed in 70 L water in a water bath (50 cm x 70 cm x 30 cm (height) to determine a time (minute) to increase a weight by roughly 15 kg by water-absorption to swell.
(ii) Slippery feel: After water-absorption and swelling in the test (i), the surface of the water-swellable waterproof sealant is touched with a hand to judge the presence of slippery feel on the surface.
○: The surface of the bag is not slippery.
x: The surface of the bag is slippery.
(iii) Leaking of gel: After water-absorption and swelling in the test (i), the water-swellable waterproof sealant is pulled out from the water bath and a three tiered bag is examined to find if any gel is leaked from the bottom bag.
○: No gel is leaked on the surface of the bag.
✕: A gel is leaked on the surface of the bag
(iv) Stability of the three tiered bag: The bag is aligned side-by-side and three tiered to form one side, four of which (total of 24 bags used) are configured to form a cube with a hole at the center, to which a tip of a hose with a diameter of 2 cm is inserted to the bottom. A water is injected at a flow rate of 30 L/min until overflowing from the top and then collapse of the waterproof sealant and water leaking from the gap between the water-swellable waterproof sealants are examined. (Referred to Figure 3.)
Collapse O: No collapse..x: A waterproof sealant moves and collapses.
Leak O: Little water leak..x: Extensive water leak.

Table 1

| | Water- swellable waterproof sealant | Swelling time (minute) | Slippery feel | Gel leak | Stability and leak in three tiered bag | |
|---|---|---|---|---|---|---|
| | | | | | Stability | Water leak |
| Example 1 | B (i) | 4 | ○ | ○ | ○ | ○ |
| Example 2 | B (ii) | 3 | ○ | ○ | ○ | ○ |
| Example 3 | B (iii) | 5 | ○ | ○ | ○ | ○ |
| Example 4 | B (iv) | 3 | ○ | ○ | ○ | ○ |
| Example 5 | B (v) | 4 | ○ | ○ | ○ | ○ |
| Comparative Example 1 | B (vi) | 13 | × | × | × | ○ |
| Comparative Example 2 | B (vii) | 12 | × | ○ | ○ | × |
| Comparative Example 3 | B (viii) | 4 | ○ | × | × | × |

Manufacture Example 6

A polypropylene nonwoven fabric (weight/area: 200 g/m$^2$) was cut into a size of 30 cm x 50 cm for both top and bottom, that of 20 cm x 170 cm for the side and that of 20 cm x 70 cm for the divider, respectively. The top is cut out at the center by 10 cm x 20 cm vertically and horizontally (for open chamber) to form a hole, of which top and bottom sides are sewn with a cutting cloth for the divider. Four hundred and one hundred pieces of the circular rubber protrusion (2-3 mm high) with a diameter of 1 cm were fused to the bottom and top, respectively to form a rectangular solid bag with a hole at the center, while a part of the sealed chamber is kept to have the opening.

Examples 6-9

Two hundred grams of the water-absorbent resins A (i) - A (iv) obtained in Manufacture Examples described above were sealed in the rectangular solid bag with the hole obtained in Manufacture Example 6 to yield the rectangular solid water-swellable waterproof sealant Cv(i) - C(iv).

Example 10

A POVAL® (PVA) film (CP-1220T10 from Kuraray Co. Ltd.; degree of saponification, 87-89%) with thickness of 30 $\mu$m was laminated to a nonwoven fabric made from a dry wood pulp web (Havix JS45HD-4W from Havix Co. Ltd.) to form a sheet (a), which was cut into a rectangle with a size of 10 x 15 cm. Two PVA laminated sheets were stacked such that the PVA layer faces each other and three edges (sides) were heat-sealed to yield a bag. Fifty grams of the water-absorbent resin A(i) was added to this bag, the opening of which was then heat-sealed (sealed) to yield the gelling material. As similar to Example 5, four pieces of the gelling materials were placed apart at the same interval in the rectangular solid bag with a hole obtained in Example 6 and fixed with a double-faced tape and then the opening was sewn to yield the rectangular solid water-swellable waterproof sealant C(v) with a hole.

Comparative Examples 4-5

In Example 5, the rectangular solid water-swellable waterproof sealants with the hole C(vi)-C(vii) were obtained similarly as Example 5 except the water-absorbent resins A(v)-A(vi) obtained in Comparative Manufacture Examples 1-2 was used instead of the water-absorbent resin A i).

Comparative Example 6

In Example 5, the water-swellable waterproof sealant C(viii) was obtained similarly as Example 5 except a conventional non-polyhedron bag for the sandbag obtained in Comparative Manufacture Example 3 was used instead of the above rectangular solid water-swellable waterproof sealant with a hole.

Test Example

Following tests were carried out for the water-swellable waterproof sealants C(i)-C(v) in Examples 6-10 described above and those C(vi)-C(viii) in Comparative Examples 4-6. The results are shown in Table 2.

Test Method

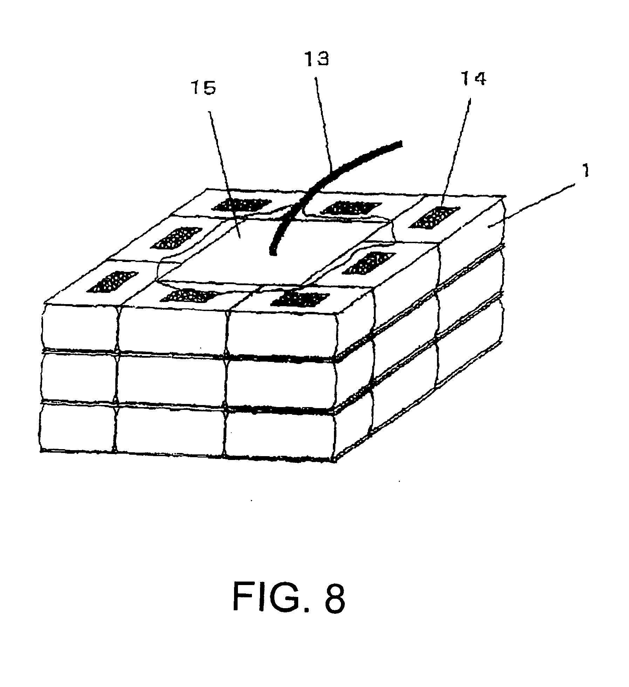

(i) Swelling time of the water-swellable waterproof sealant: same as the one in Table 1.
(ii) Slippery feel: same as the one in Table 1.
(iii) Gel leak: same as the one in Table 1.
(iv) Stability of three tiered bags: Roughly 10 kg of a gravel was fed through the hole (open chamber) of each water-swellable waterproof sealant. The bag was aligned side-by-side and three tiered to form one side, four of which (total of 24 pieces used) is configured to form a cube with a hole at the center, to which a tip of a hose with a diameter of 2 cm is inserted to the bottom. Water was injected at a flow rate of 30 Umin until overflowing from the top to examine if the waterproof sealant collapses and water is leaked from the gap between the waterproof sealants. (Referred to Figure 8.)
Collapse ○: No collapse. . ×: A waterproof sealant moves and collapses.
Leak ○: Little water leak. .×: Extensive water leak.

Table 2

| | Water- swellable waterproof sealant | Swelling time (minute) | Slippery feel | Gel leak | Stability and leak in three tiered bag | |
| --- | --- | --- | --- | --- | --- | --- |
| | | | | | Stability | Water leak |
| Example 6 | C (i) | 3 | ○ | ○ | ○ | ○ |
| Example 7 | C (ii) | 2 | ○ | ○ | ○ | ○ |
| Example 8 | C (iii) | 4 | ○ | ○ | ○ | ○ |
| Example 9 | C (iv) | 2 | ○ | ○ | ○ | ○ |
| Example 10 | C (v) | 3 | ○ | ○ | ○ | ○ |
| Comparative Example 4 | C (vi) | 11 | × | × | × | ○ |
| Comparative Example 5 | C (vii) | 10 | × | ○ | ○ | × |
| Comparative Example 6 | C (viii) | 4 | ○ | × | × | × |

**Industrial applicability**

The water-swellable waterproof sealant in the present invention can generate the effect listed below.

(1) The specific water-absorbent resin with a fast rate of swelling is used to absorb water to quickly swell to the waterproof sealant and easy to handle.
(2) Stacking of the waterproof sealant neither cause leak of the water-absorbent resin gel from it nor slippery feel, resulting easy handling.
(3) The top and bottom of the water absorbed and swollen waterproof sealant are planar and easily stacked. The stacked waterproof sealant is stable and resists to collapse when absorbing a large amount of water.
(4) Both top and bottom of the waterproof sealant are planar and stacking the waterproof sealant with the same geometry does not generate a gap between the waterproof sealants and resists water leaking from the gap. Providing the waterproof sealant with the stitch substantially increases this effect.

(5) Stacking of the rectangular solid or cubic waterproof sealant further increases the stability and further reduces the gap between the waterproof sealants and resists the water leaking from the gap.

(6) Because the water absorbed and swollen open chamber of the waterproof sealant with a hole can be filled with the heavy solid such as sand, the specific gravity of the waterproof sealant becomes larger than that of water so that the waterproof sealant stably copes with a strong water flow. Furthermore, when a stake is driven in the open chamber of the stacked waterproof sealant, a plurality of the waterproof sealants is skewed to integrate to form a group of more stable and strong waterproof sealants.

(7) The water-swellable waterproof sealant before use is thin for easy storage and light for easy transport.

The water-swellable waterproof sealant in the present invention can be suitable for use as the waterproof sealant in preventing the levee, building and house from penetration of rainwater when flooding and heavy raining. Furthermore, The waterproof sealant can be applied as the penetration preventive waterproof sealant for general water such as rainwater, tap water, well water, river water, pond and lake water, seawater and muddy water and a sludge of the discharged water and effluent from the mine, civil engineering and construction work site, paper and pulp plant, fiber and dyeing plant, machine and metal processing plant, ore smelting plant, chemical plant, electrics and electronics related plant, healthcare industry facility such as a hospital, food processing plant, ceramic industry plant, municipal water plant, sewage treatment plant and household.

## Claims

1. A water-swellable waterproof sealant, which comprises water-absorbent resin particles (A) sealed within a polyhedron (B) composed of a water-permeable sheet **characterized in that** the inside of said polyhedron (B) is partitioned into a plurality of rooms separated with a divider (7), at least one of the rooms being a closed chamber (3) and the rest of the rooms being an open chamber (4) leading to the outside of the polyhedron (B), said water absorbent resin particules (A) being sealed within said closed chamber, said open chamber (4) being provided with a feeding mouth (6) in order to be filled with a heavy solid (10) thereinto and/or to be driven with a stake (12).

2. The water-swellable waterproof sealant of Claim 1, wherein said polyhedron (B) has a configuration such that said polyhedron (B) containing sealed therein swollen water-absorbent resin particles (A) after absorbing water has at least two planar faces.

3. The water-swellable waterproof sealant of Claim 1, wherein said polyhedron (B) becomes rectangular or cubic after the water-absorbent resin particles (A) swollen absorbing water.

4. The water-swellable waterproof sealant of Claim 1, wherein said polyhedron (B) is provided with a stitch on the side.

5. The water-swellable waterproof sealant of Claim 1, wherein said water-absorbent resin particles (A) has an average particle diameter of 100 - 850 $\mu$m, a rate of swelling of 3 - 50 seconds, a water absorbency of 20 - 1,000 g/g, a ratio of a water retention to water absorbency of 0.55 - 1.00, a gel modulus of $2\times10^3$- $12\times10^3$ N/m$^2$, a water soluble content of not more than 30% by mass, a residual water soluble monomer content of not more than 500 ppm, and a blocking resistance to moisture of not more than 9%.

6. The water-swellable waterproof sealant of Claim 1, wherein it takes 0.5 - 5 minutes to increase the weight of said water-swellable waterproof sealant by 15 kg when immersed in deionized water.

7. The water-swellable waterproof sealant of Claim 1, which has the closed chamber (3) at the center of the polyhedron and the open chamber (4) at both sides of the closed chamber (3).

8. The water-swellable waterproof sealant of Claim 1, which has the open chamber (4) at both outsides of each divider (7) and the closed chamber (3) in the middle of both dividers (7) to separate the open chamber (4) apart.

9. A waterproof sealant formed by water-absorption of the water-swellable waterproof sealant of Claim 1.

10. Use of the water-swellable waterproof sealant of Claim 1, **characterized in that** a plurality of the waterproof sealants are stacked in a form of stone wall, and tied with adjacent waterproof sealent with a string (9) and a stake (12) driven into the open chamber (4) of the waterproof sealants.

**Patentansprüche**

1. Mit Wasser quellfähiges, wasserbeständiges Dichtmittel, welches wasserabsorbierende Harzpartikel (A) aufweist, die innerhalb eines Polyeders (B) abgedichtet sind, das aus einem wasserdurchlässigen Blatt zusammengesetzt ist, **dadurch gekennzeichnet, dass** die Innenseite des Polyeders (B) in eine Vielzahl von Räume geteilt ist, die durch ein Teilelement (7) getrennt sind, wobei wenigstens einer der Räume eine geschlossene Kammer (3) ist und der Rest der Räume offene Kammern (4) sind, die zu der Außenseite des Polyhydrons (B) führen, wobei die wasserabsorbierenden Harzpartikel (A) innerhalb der geschlossenen Kammer (3) abgedichtet sind, wobei die offene Kammer (4) mit einer Zuführöffnung (6) versehen ist, um mit einem schweren Feststoff (10) in dasselbe gefüllt und/oder mittels einer Stange (12) angetrieben zu werden.

2. Mit Wasser quellfähiges, wasserbeständiges Dichtmittel nach Anspruch 1, wobei der Polyeder (B) eine derartige Konfiguration aufweist, dass der Polyeder (B), welcher dichtend darin gequollene, wasserabsorbierende Harzpartikel (A) aufweist, nach dem Absorbieren von Wasser zumindest zwei ebene Flächen aufweist.

3. Mit Wasser quellfähiges, wasserbeständiges Dichtmittel nach Anspruch 1, wobei der Polyeder (B) rechteckig oder kubisch wird, nachdem die wasserabsorbierenden Harzpartikel (A) durch Absorbieren von Wasser aufgequollen sind.

4. Mit Wasser quellfähiges, wasserbeständiges Dichtmittel nach Anspruch 1, wobei der Polyeder (B) mit einer Naht auf der Seite versehen ist.

5. Mit Wasser quellfähiges, wasserbeständiges Dichtmittel nach Anspruch 1, wobei die wasserabsorbierenden Harzpartikel (A) einen durchschnittlichen Partikeldurchmesser von 100 - 850 $\mu$m, eine Quellrate von 3 - 50 Sekunden, eine Wasserabsorbtionsfähigkeit von 20 - 1000 g/g, ein Verhältnis einer Wasserzurückhaltung zu Wasserabsorbtionsvermögen von 0,55 - 1,00, einen Gel-Modul von $2 \times 10^3$ - $12 \times 10^3$ N/m², einen wasserlöslichen Gehalt von nicht mehr als 30 Massen-%, einen restlichen wasserlöslichen Monomergehalt von nicht mehr als 500 ppm und einen Blockierwiderstand gegenüber Flüssigkeit von nicht mehr als 9 % aufweist,

6. Mit Wasser quellfähiges, wasserbeständiges Dichtmittel nach Anspruch 1, wobei es 0,5 - 5 Minuten dauert, um das Gewicht des mit Wasser quellfähigen, wasserbeständigen Dichtmittels um 15 kg zu erhöhen, wenn es in deionisiertem Wasser eingetaucht ist.

7. Mit Wasser quellfähiges, wasserbeständiges Dichtmittel nach Anspruch 1, welches die geschlossene Kammer (3) in der Mitte des Polyeders und die offene Kammer (4) an beiden Seiten der geschlossenen Kammer (3) aufweist.

8. Mit Wasser quellfähiges, wasserbeständiges Dichtmittel nach Anspruch 1, welches die offene Kammer (4) an beiden äußeren Seiten von jedem Teilelement (7) und die geschlossene Kammer (3) in der Mitte der beiden Teilelemente (7) aufweist, um die offene Kammer (4) voneinander zu teilen.

9. Wasserbeständiges Dichtmittel, das durch Absorbtion von Wasser des mit Wasser quellfähigen, wasserbeständigen Dichtmittels nach Anspruch 1 gebildet wurde.

10. Verwendung des mit Wasser quellfähigen, wasserbeständigen Dichtmittels nach Anspruch 1, **dadurch gekennzeichnet, dass** eine Vielzahl der wasserbeständigen Dichtmittel in Form einer Steinmauer gestapelt werden und mit benachbarten wasserbeständigen Dichtmitteln mittels einer Schnur und einer Stange (12), die in die offene Kammer (4) der wasserbeständigen Dichtmittel eingeführt wurde, verschnürt werden.

**Revendications**

1. Produit de scellement étanche gonflable avec l'eau, qui comporte des particules (A) de résine absorbante d'eau liées au moyen d'un polyhédron (B) composé d'une couche perméable à l'eau, **caractérisé en ce que** l'intérieur dudit polyhédron (B) est partitionné en une pluralité de logements par un séparateur (7), **en ce qu'**au moins un des logements constitue une chambre fermée (3) et que le reste des logements constitue une chambre ouverte (4) qui débouche à l'extérieur du polyhédron (B), lesdites particules (A) de résine absorbante d'eau étant scellées à l'intérieur de ladite chambre fermée, ladite chambre ouverte (4) étant pourvue d'une embouchure d'approvisionnement (6) afin d'être remplie d'un solide lourd (10) et/ou d'être dirigée au moyen d'une tige (12).

2. Produit de scellement étanche gonflable avec l'eau, selon la revendication 1, dans lequel ledit polyhédron (B) a une configuration telle que ledit polyhédron (B) contenant les particules (A) gonflées de résine absorbante d'eau ont au moins deux faces planes après avoir absorbé l'eau.

3. Produit de scellement étanche gonflable avec l'eau, selon la revendication 1, dans lequel ledit polyhédron (B) devient rectangulaire ou cubique après que lesdites particules (A) de résine absorbante d'eau aient gonflées en absorbant l'eau.

4. Produit de scellement étanche gonflable avec l'eau, selon la revendication 1, dans lequel ledit polyhédron (B) est pourvu d'une couture sur le côté.

5. Produit de scellement étanche gonflable avec l'eau, selon la revendication 1, dans lequel lesdites particules (A) de résine absorbante d'eau ont un diamètre moyen de 100 - 850 $\mu$m, une vitesse de gonflement de 3 - 50 secondes, une capacité d'absorption de 20 - 1,000 g/g, un ratio de rétention d'eau par rapport à la capacité d'absorption de 0.55 - 1.00, un module de gélification de $2 \times 10^3$ - $12 \times 10^3$ N/m$^2$, un contenant soluble dans l'eau de plus ou moins 30% de la masse, un contenant résiduel de monomère soluble dans l'eau de pas plus de 500 ppm et une résistance à l'humidité de pas plus de 9%.

6. Produit de scellement étanche gonflable avec l'eau, selon la revendication 1, dans lequel entre 0,5 et 5 minutes sont nécessaires pour augmenter le poids du produit de scellement étanche gonflable avec l'eau de 15 kg lorsqu'il est immergé dans de l'eau désionisée.

7. Produit de scellement étanche gonflable avec l'eau, selon la revendication 1, ayant la chambre fermée (3) au centre du polyhédron et la chambre ouverte (4) sur les deux côtés par rapport à la chambre fermée (3).

8. Produit de scellement étanche gonflable avec l'eau, selon la revendication 1, ayant la chambre ouverte (4) sur les deux côtés de chaque séparateur (7) et la chambre fermée (3) au milieu de chacun des deux séparateurs (7) pour disposer à part la chambre ouverte (4).

9. Scellement étanche à l'eau constitué du produit étanche gonflable avec l'eau, selon la revendication 1.

10. Utilisation du produit de scellement étanche gonflable avec l'eau selon la revendication 1, **caractérisé en ce que** plusieurs scellements étanches à l'eau sont empilés sous forme d'un mur en pierre et liés par des scellements étanches à l'eau adjacents au moyen d'un lien (9) et d'une tige (12) dirigée dans la chambre ouverte (4) desdits scellements étanches à l'eau.

FIG . 1

FIG. 2

FIG. 3

FIG. 4

# FIG. 5

FIG. 6

FIG. 7

FIG. 8

REFERENCES CITED IN THE DESCRIPTION

**Patent documents cited in the description**

- EP 368107 A1
- JP 2000303424 A
- JP 52025886 A
- JP 53046199 B
- JP 53006200 B
- JP 55021041 B
- JP 52014689 A
- JP 52027456 A
- JP 8028216 A
- JP 3083868 B